# EUROPÄISCHE PATENTSCHRIFT

(11) **EP 3 616 882 B1**
(45) Veröffentlichungstag und Bekanntmachung des Hinweises auf die Patenterteilung: **26.05.2021**
(21) Anmeldenummer: 19166802.9
(22) Anmeldetag: 02.04.2019
(51) Int. Cl.: B29C 49/66, B29C 49/06, B29C 49/12, B29K 67/00, B29L 31/00, B67C 3/22

(54) **BEHÄLTERBEHANDLUNGSANLAGE UND -VERFAHREN ZUR HERSTELLUNG VON KUNSTSTOFFBEHÄLTERN**
CONTAINER TREATMENT SYSTEM AND METHOD FOR MANUFACTURING PLASTIC CONTAINERS
INSTALLATION DE TRAITEMENT DES RÉCIPIENTS ET PROCÉDÉ DE FABRICATION DE RÉCIPIENTS EN MATIÈRE PLASTIQUE

(30) Priorität: 28.08.2018 DE 102018214531
(43) Veröffentlichungstag der Anmeldung: 04.03.2020
(73) Patentinhaber: Krones AG, 93073 Neutraubling (DE)
(72) Erfinder: BODENSTEINER, Christian, 93073 Neutraubling (DE); HIPPEL, Andreas, 93073 Neutraubling (DE); KNOECHEL, Veronika, 93073 Neutraubling (DE); VOTH, Klaus, 93073 Neutraubling (DE); BECHER, Valentin, 93073 Neutraubling (DE); POESCHL, Stefan, 93073 Neutraubling (DE)
(74) Vertreter: Grünecker Patent- und Rechtsanwälte PartG mbB

(56) Entgegenhaltungen:
- EP-A1- 0 301 980
- DE-A1-102008 032 123
- DE-T2-602005 002 566
- FR-A- 1 565 381
- FR-A1- 2 405 809

## Beschreibung

Die Erfindung betrifft eine Behälterbehandlungsanlage und ein Behälterbehandlungsverfahren zur Herstellung von Kunststoffbehältern mit den Merkmalen des Oberbegriffs von Anspruch 1 bzw. 13. Derartige Vorrichtungen und Verfahren sind in den Patentschriften FR2405809A1, FR1565381A, EP0301980A1, DE602005002566T2 und DE102008032123A1 beschrieben.

Üblicherweise umfassen derartige Behälterbehandlungsanlagen eine Blasformmaschine, mit der Vorformlinge erwärmt und in Blasformen zu den Kunststoffbehältern umgeformt werden. Darüber hinaus können derartige Behälterbehandlungsanlagen weitere Behandlungsmaschinen für die Kunststoffbehälter umfassen, wie beispielsweise eine Etikettiermaschine und/oder einen Füller, um die mittels der Blasformmaschine hergestellten Kunststoffbehälter zu etikettieren und/oder mit einem fließfähigen Produkt zu befüllen, beispielsweise mit einem Getränk.

Damit die Kunststoffbehälter nach der Herstellung formstabil bleiben, ist es notwendig, sie unter eine Glasübergangstemperatur des Behältermaterials abzukühlen. Dazu umfassen derartige Behälterbehandlungsanlagen üblicherweise eine an einem Transporteur angeordnete Kühleinrichtung, um die Kunststoffbehälter nach dem Umformen abzukühlen.

Die DE 60 2005 002 566 T2 offenbart ein Verfahren und eine Anlage zur Behälterherstellung, bei der die Behälter nach einer Formeinheit eine Kühleinheit durchlaufen und mit einem Gemisch aus Luft und Wasser aus einer Düse besprüht und dadurch abgekühlt werden.

Nachteilig dabei ist, dass die Kunststoffbehälter vor einer nachfolgenden Etikettierung erst wieder getrocknet werden müssen, da ansonsten die Etiketten nicht ausreichend an den Kunststoffbehältern anhaften. Darüber hinaus gibt es hygienische Bedenken aufgrund der offenen Wasserführung.

Andererseits sind Behälterbehandlungsanlagen bekannt, bei denen die Kunststoffbehälter durch eine Kontaktkühlung in den Blasformen und/oder durch eine Luftkühlung des Bodens gekühlt werden. Allerdings sind derartige Behälterbehandlungsanlagen mit höheren Herstell- und Betriebskosten verbunden, um eine ausreichende Kühlwirkung sicherzustellen.

Aufgabe der vorliegenden Erfindung ist es daher, eine Behälterbehandlungsanlage und -verfahren zur Herstellung von Kunststoffbehältern mit einer Kühleinrichtung bereitzustellen, die mit einfacheren Mitteln eine ausreichende Kühlwirkung der Kunststoffbehälter nach dem Umformen gewährleistet.

Zur Lösung dieser Aufgabenstellung stellt die Erfindung eine Behälterbehandlungsanlage mit den Merkmalen des Anspruchs 1 bereit. Vorteilhafte Ausführungsformen der Erfindung sind in den Unteransprüchen genannt.

Dadurch, dass die Kühleinrichtung zum Kühlen der Kunststoffbehälter wenigstens einen Applikator für Kohlendioxidschnee umfasst, werden die Kunststoffbehälter mittels des Kohlendioxidschnees gekühlt. Bei umfangreichen Untersuchungen der Anmelderin hat sich herausgestellt, dass mit dem Kohlendioxidschnee an den Kunststoffbehältern Oberflächentemperaturen von ca. -50 °C erzielt werden können. Dadurch nehmen die Wandungen der Kunststoffbehälter besonders schnell eine Temperatur an, die unter der Glasübergangstemperatur liegt und können sich dann anschließend nicht mehr verformen. Überraschenderweise hat sich dabei anders als erwartet herausgestellt, dass die Kunststoffstruktur durch die schockartige Kühlung im Vergleich zu bekannten Kühlverfahren beständiger ist. Darüber hinaus gehen die Schneekristalle des Kohlendioxidschnees direkt vom festen in den gasförmigen Zustand über, so dass keine Tropfenbildung an den Kunststoffbehältern erfolgt, die die Etikettierung beeinflussen könnte. Des Weiteren wird Kohlendioxid bereits in einer Vielzahl von Getränken zur Karbonisierung verwendet, weshalb eine Kontamination weniger wahrscheinlich ist.

Die Behälterbehandlungsanlage kann in einer Getränkeverarbeitungsanlage angeordnet sein. Die Behälterbehandlungsanlage kann weitere Behandlungsmaschinen für die Kunststoffbehälter, insbesondere eine Etikettiermaschine und/oder einen Füller umfassen. Denkbar ist, dass der Transporteur und die daran angeordnete Kühleinrichtung Teile der Blasformmaschine sind. Ebenso ist denkbar, dass der Transporteur mit der daran angeordneten Kühleinrichtung der Blasformmaschine nachgeordnet ist. Zudem kann die Behälterbehandlungsmaschine weitere Transporteure umfassen, um die Kunststoffbehälter bei der Behandlung und/oder zwischen den Behandlungsmaschinen zu transportieren.

Die Kunststoffbehälter können dazu vorgesehen sein, Getränke, Hygieneartikel, Pasten, chemische, biologische und/oder pharmazeutische Produkte aufzunehmen. Im Allgemeinen können die Kunststoffbehälter für jegliche fließfähige bzw. abfüllbare Produkte vorgesehen sein. Beispielsweise kann es sich um ein Getränkeprodukt handeln. Denkbar ist auch, dass die Behälter für ein nicht fließfähiges Füllgut vorgesehen sind, beispielsweise Kapseln, Tabletten, Pasten und/oder Putzstein. Die Kunststoffbehälter können als Flaschen ausgebildet sein, vorzugsweise als PET-Flaschen.

Der Transporteur kann ein Karussell oder einen Lineartransporteur mit daran angeordnete Behälteraufnahmen umfassen. Die Behälteraufnahmen können Klammern für einen Behälterhals und/oder Führungselemente für einen Behälterkörper und/oder Stützelemente für einen Behälterboden umfassen. Vorzugsweise kann das Karussell um eine vertikale Achse mittels eines Antriebs drehbar sein. Mit "vertikal" kann hier die Richtung gemeint sein, die auf den Erdmittelpunkt zeigt bzw. in Richtung der Schwerkraft verläuft.

Die Kühleinrichtung kann einen Generator und/oder einen Vorrat für flüssiges Kohlendioxid umfassen. Denkbar ist, dass die Kühleinrichtung dazu ausgebildet ist, das flüssige Kohlendioxid durch Expansion in den Kohlendioxidschnee umzuwandeln. Beispielsweise kann die Expansion des flüssigen Kohlendioxids von einem Druck in einem Bereich von 40 - 60 bar auf Umgebungsdruck erfolgen. Dazu kann die Kühleinrichtung eine oder mehrere Düsen umfassen. Denkbar ist, dass die Kühleinrichtung eine Drucklufteinheit umfasst, um den Strahl aus Kohlendioxidschnee zu stabilisieren.

Der wenigstens eine Applikator kann jeweils einen Austrittsbereich mit mehreren Düsen zur Verteilung des Kohlendioxidschnees umfassen. Dadurch kann der Kohlendioxidschnee flächig an besonders stark zu kühlende Bereiche der Kunststoffbehälter abgegeben werden. Beispielsweise kann es sich bei dem Austrittsbereich mit mehreren Düsen um eine flächige Düsenanordnung handeln, insbesondere um eine Düsenplatte. Der Applikator kann einen Verteiler umfassen, um flüssiges Kohlendioxid und/oder Druckluft auf die Düsen zu verteilen. Der wenigstens eine Applikator kann mit einem oder mehreren Schläuchen und/oder Rohrleitungen mit dem Generator und/oder dem Vorrat für flüssiges Kohlendioxid verbunden sein.

Die Kühleinrichtung kann derart ausgebildet sein, dass die Düsen im Betrieb einen Abstand zu einem zu kühlenden Kunststoffbehälter im Bereich von 10 - 40 mm, insbesondere von 15 - 30 mm aufweisen. Dadurch wird sichergestellt, dass der Kunststoffbehälter einerseits nicht berührt und andererseits die von den Düsen ausgehenden Strahlen mit Kohlendioxidschnee nicht zu stark aufgeweitet werden, so dass eine hohe Kühlwirkung sichergestellt ist.

Der Austrittsbereich mit den Düsen kann wenigstens abschnittsweise gekrümmt sein, um den Kohlendioxidschnee angepasst an eine geometrische Formgebung der Kunststoffbehälter abzugeben. Dadurch kann der Kohlendioxidschnee angepasst an die geometrische Formgebung der Kunststoffbehälter abgegeben werden, so dass die entsprechenden Bereiche besonders gleichmäßig gekühlt werden. Anders ausgedrückt, kann der Austrittsbereich mit den Düsen komplementär zur geometrischen Formgebung der Kunststoffbehälter verlaufen. Denkbar ist, dass der Austrittsbereich der Düsen und/oder der Applikator wenigstens teilweise mit einem generativen Fertigungsverfahren, beispielsweise einem 3D-Druckverfahren hergestellt ist. Dadurch kann der Austrittsbereich mit den Düsen besonders flexibel und dennoch kostengünstig hergestellt werden. Insbesondere kann die geometrische Formgebung einen Behälterboden umfassen. Mit Behälterboden kann hier ein Boden der Kunststoffbehälter gemeint sein. Dadurch kann im Bereich des Behälterbodens die größte Kühlwirkung erzeugt werden.

Bei Verwendung von mehreren nacheinander geschalteten Düsen, ist es vorteilhaft, den Abstand der Düsen nicht gleichmäßig, sondern von kurz nach länger zu gestalten, da am Beginn der Kühlung die Wärme schneller nach außen transportiert wird aufgrund des höheren Temperaturgradienten.

Der wenigstens eine Applikator kann von außen zu einem oder mehreren Bodenbereichen des Kunststoffbehälters hin ausgerichtet sein, um den einen oder die mehreren Bodenbereiche gezielt zu kühlen. Insbesondere können die Bodenbereiche als Einbuchtungen am Behälterboden ausgebildet sein. Es hat sich bei umfangreichen Untersuchungen herausgestellt, dass Einbuchtungen am Behälterboden nach dem Umformen eine besonders hohe Temperatur aufweisen und daher besonders stark gekühlt werden müssen.

Der wenigstens eine Applikator kann zumindest teilweise in eine Reckstange der Blasformmaschine integriert ausgebildet sein. Üblicherweise umfasst die Blasformmaschine die Reckstange, um den Vorformling beim Umformen in der entsprechenden Blasform zu strecken. Folglich kann der Kohlendioxidschnee durch die Reckstange abgegeben werden, während sich der entsprechende Kunststoffbehälter noch in seiner Blasform befindet. Dadurch kann der Kühlprozess noch früher eingeleitet werden, wobei die Blasform den Kunststoffbehälter stabilisiert.

Denkbar ist, dass der wenigstens eine Applikator mit einer Transportbewegung des Transporteurs mitlaufend ausgebildet ist, um ihn wenigstens teilweise mit den Kunststoffbehältern beim Transport mitzuführen. Dadurch ist die Verweilzeit des wenigstens einen Applikators bei den Kunststoffbehältern besonders lang. Denkbar ist, dass die Kühleinrichtung eine Verfahreinheit umfasst, um den wenigstens einen Applikator mit der Transportbewegung mitzuführen. Ebenso ist denkbar, dass der wenigstens eine Applikator am Transporteur mitlaufend angegliedert ist.

Alternativ ist denkbar, dass der wenigstens eine Applikator stationär angeordnet ist, wobei der Transporteur dazu ausgebildet ist, die Kunststoffbehälter beim Kühlen gegenüber dem wenigstens einen Applikator zu verfahren oder anzuhalten. Dadurch kann der wenigstens eine Applikator besonders einfach aufgebaut werden und mit starren Zuführungen für das Kohlendioxid versorgt werden. Denkbar ist beispielsweise, dass der wenigstens eine stationäre Applikator eine Düsenanordnung, wie eine Düsenreihe umfasst, an der die Kunststoffbehälter mittels des Transporteurs beim Kühlen vorbeigefahren werden. Ebenso ist denkbar, dass die Kunststoffbehälter jeweils beim Kühlen gegenüber dem wenigstens einen stationär angeordneten Applikator angehalten und danach weiter transportiert werden.

Der Transporteur kann einen Teilungsverzugsstern oder einen Doppelbelegungsstern umfassen. Mit dem Teilungsverzugsstern kann ein Teilungsabstand der Kunststoffbehälter beim Transport verringert werden, so dass sich auch die Transportgeschwindigkeit zum Kühlen verringert. Bei einem Doppelbelegungsstern wird dagegen ein bestimmter Kunststoffbehälter beim Kühlen zweimal am Applikator vorbeigeführt. Entsprechend wird die Verweildauer eines bestimmten Kunststoffbehälters im Bereich des wenigstens einen Applikators verlängert und dadurch die Kühlwirkung erhöht.

Darüber hinaus stellt die Erfindung zur Lösung der Aufgabenstellung ein Behälterbehandlungsverfahren mit den Merkmalen des Anspruchs 13 bereit. Vorteilhafte Ausführungsformen der Erfindung sind in den Unteransprüchen genannt.

Dadurch, dass die Kühleinrichtung mit wenigstens einem Applikator den Kohlendioxidschnee auf die Kunststoffbehälter abgibt, um sie zu kühlen, werden die Kunststoffbehälter mit dem Kohlendioxidschnee gekühlt. Bei umfangreichen Untersuchungen der Anmelderin hat sich herausgestellt, dass mit dem Kohlendioxidschnee an den Kunststoffbehältern Oberflächentemperaturen von ca. -50 °C erzielt werden können. Dadurch nehmen die Wandungen der Kunststoffbehälter besonders schnell eine Temperatur an, die unter der Glasübergangstemperatur liegt und können sich dann anschließend nicht mehr verformen. Überraschenderweise hat sich dabei anders als erwartet herausgestellt, dass die Kunststoffstruktur durch die schockartige Kühlung im Vergleich zu bekannten Kühlverfahren beständiger ist. Darüber hinaus gehen die Schneekristalle des Kohlendioxidschnees direkt vom festen in den gasförmigen Zustand über, so dass keine Tropfenbildung an den Kunststoffbehältern erfolgt, die die Etikettierung beeinflussen könnte. Des Weiteren wird Kohlendioxid bereits in einer Vielzahl von Getränken zur Karbonisierung verwendet, weshalb eine Kontamination weniger wahrscheinlich ist.

Das Behälterbehandlungsverfahren kann die zuvor in Bezug auf die Behälterbehandlungsanlage beschriebenen Merkmale, insbesondere der Ansprüche 1 - 12 einzeln oder in beliebigen Kombinationen sinngemäß umfassen. Das Behälterbehandlungsverfahren kann mit der zuvor beschriebenen Behälterbehandlungsanlage, insbesondere nach einem der Ansprüche 1 - 12 durchgeführt werden.

Der wenigstens eine Applikator kann beim Kühlen mit dem Transport der Kunststoffbehälter mitgeführt werden. Dadurch verweilen die Kunststoffbehälter besonders lang im Bereich des wenigstens einen Applikators, so dass sich eine besonders starke Kühlwirkung ergibt.

Die Kunststoffbehälter können beim Kühlen gegenüber dem wenigstens einen Applikator mittels des Transporteurs verfahren oder angehalten werden. Werden die Kunststoffbehälter verfahren, so ergibt sich ein besonders hoher Behälterdurchsatz. Werden dagegen die Kunststoffbehälter angehalten, so erhöht sich die Verweilzeit beim Kühlen und damit die Kühlwirkung auf die Kunststoffbehälter. Bei beiden Varianten kann die Kühleinrichtung besonders einfach aufgebaut werden, da der wenigstens eine Applikator stationär sein kann und somit durch starre Zuführungen mit Kohlendioxid versorgt werden kann.

Weitere Merkmale und Vorteile der Erfindung werden nachfolgend anhand der in den Figuren dargestellten Ausführungsbeispiele erläutert. Dabei zeigt:
- Figur 1: ein erfindungsgemäßes Ausführungsbeispiel einer Behälterbehandlungsanlage zur Herstellung von Kunststoffbehältern als Draufsicht;
- Figur 2: eine seitliche Detailansicht der Kühleinrichtung aus der Figur 1 zum Kühlen der Kunststoffbehälter mit Kohlendioxidschnee;
- Figur 3: eine seitliche Detailansicht eines alternatives Ausführungsbeispiels einer Kühleinrichtung zum Kühlen der Kunststoffbehälter mit Kohlendioxidschnee; und
- Figur 4: eine seitliche Detailansicht eines weiteren, alternativen Ausführungsbeispiels einer Kühleinrichtung zum Kühlen der Kunststoffbehälter mit Kohlendioxidschnee.

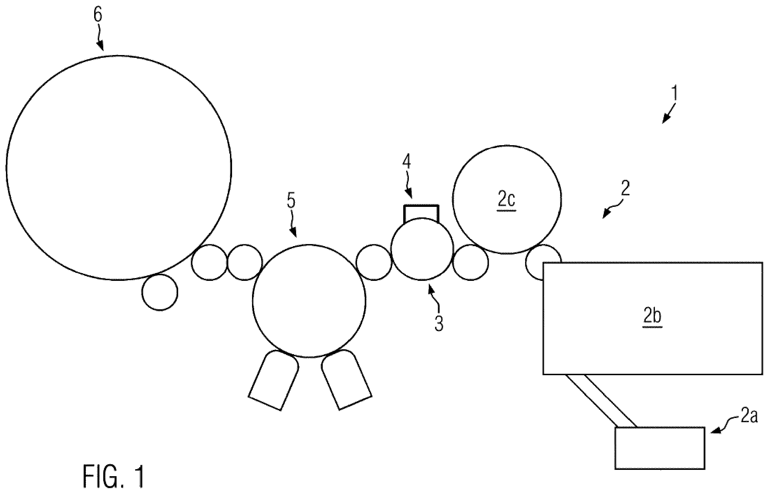

In der Figur 1 ist ein erfindungsgemäßes Ausführungsbeispiel einer Behälterbehandlungsanlage 1 zur Herstellung von Kunststoffbehältern als Draufsicht dargestellt. Zu sehen ist, dass die Behälterbehandlungsanlage 1 mehrere Behandlungsmaschinen umfasst, in diesem Ausführungsbeispiel die Blasformmaschine 2, den Transporteur 3 und die daran angeordnete Kühleinrichtung 4, die Etikettiermaschine 5 und den Füller 6. Des Weiteren sind mehrere lediglich schematisch als Kreis dargestellte Sternradtransporteure gezeigt, um die Kunststoffbehälter zwischen den einzelnen Behandlungsmaschinen 2 - 6 zu transportieren. Denkbar ist jedoch auch, dass die Kunststoffbehälter nach dem Transporteur 3 mit anderen Behandlungsmaschinen weiterverarbeitet werden, als in dem Ausführungsbeispiel der Figur 1 dargestellt.

Die Blasformmaschine 2 umfasst ihrerseits die Zuführung für Vorformlinge 2a, den Tunnelofen 2b zum Erwärmen der Vorformlinge und die Streckblasvorrichtung 2c, um die erwärmten Vorformlinge in Blasformen zu den Kunststoffbehältern umzuformen.

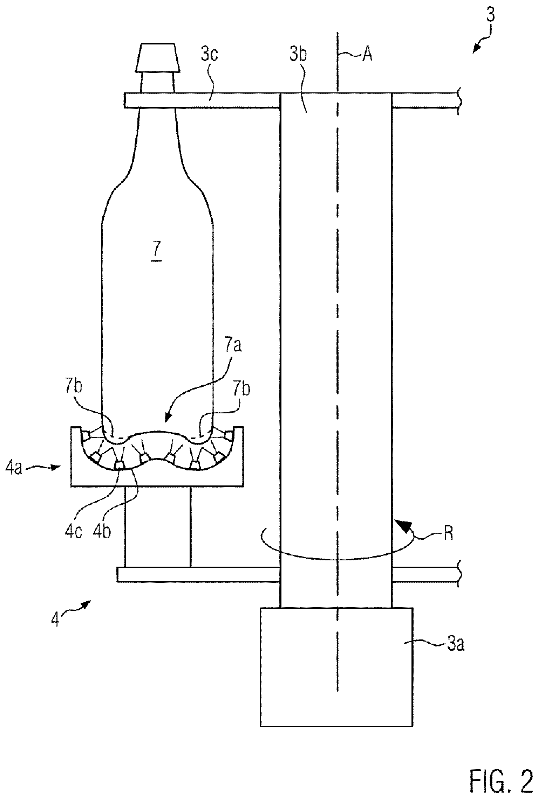

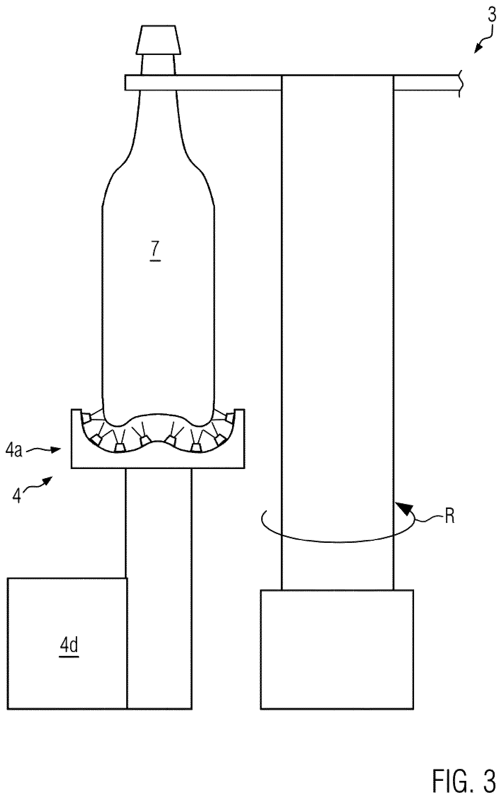

Da die Kunststoffbehälter nach der Blasformmaschine 2 noch nicht vollständig unterhalb der Glasübergangstemperatur des Behältermaterials (beispielsweise PET) abgekühlt sind, durchlaufen sie am Transporteur 3 die daran angegliederte Kühleinrichtung 4, die wenigstens einen hier nicht dargestellten Applikator für Kohlendioxidschnee umfasst. Die Kühleinrichtung 4 sowie der wenigstens eine Applikator werden weiter unten anhand der Figur 2 bzw. 3 näher erläutert. Dadurch werden die Kunststoffbehälter unter die Glasübergangstemperatur abgekühlt, so dass sie formstabil sind und gefahrlos mit den nachfolgenden Behandlungsmaschinen verarbeitet werden können.

Mittels der Etikettiermaschine 5 werden die leeren Kunststoffbehälter anschließend etikettiert und mit dem Füller 6 ein fließfähiges Produkt, beispielsweise ein Getränk, darin abgefüllt. Denkbar ist, dass dem Füller 6 ein Verschließer zugeordnet ist, um die fertig befüllten Kunststoffbehälter mit einem Verschluss zu versehen.

In der Figur 2 ist eine seitliche Detailansicht der Kühleinrichtung 4 aus der Figur 1 zum Kühlen der Kunststoffbehälter 7 mit Kohlendioxidschnee dargestellt.

Zu sehen ist, dass der Transporteur 3 beispielsweise als Karussell, insbesondere als Transportstern ausgebildet ist. Er umfasst den Antrieb 3a , die Säule 3b und die hier lediglich schematisch dargestellten Behälteraufnahmen 3c. Der Antrieb 3a umfasst einen Elektromotor, der die Säule 3b antreibt, so dass sie sich um die Mittelachse A in Umlaufrichtung R (oder entgegensetzt) dreht. Dadurch werden die Kunststoffbehälter 7 in den Behälteraufnahmen 3c umfänglich am Transporteur 3 transportiert.

Zu sehen ist auch, dass die Kühleinrichtung 4 den Applikator 4a für Kohlendioxidschnee zum Kühlen der Kunststoffbehälter 7 umfasst. Der Applikator 4a ist mit dem Austrittsbereich 4b ausgebildet, an dem mehrere Düsen 4c zur Verteilung des Kohlendioxidschnees angeordnet sind. Der Applikator 4a ist in diesem Ausführungsbeispiel mit der Transportbewegung des Transporteurs 3 mitlaufend ausgebildet, um ihn wenigstens teilweise mit den Kunststoffbehältern 7 beim Transport mitzuführen. Denkbar ist eine vom Transporteur 3 separate Verfahreinheit für den Applikator 4a oder, wie in der Figur 2 gezeigt, dass der Applikator 4a mit dem Transporteur 3 mitlaufend verbunden ist.

Das Kohlendioxid für den Applikator 4a kann beispielsweise mit einem hier nicht dargestellten Generator und/oder mit einem Vorrat (beispielsweise einem Druckbehälter) bereitgestellt werden. Beispielsweise wird das Kohlendioxid mit einem Druck von 50 bar bereitgestellt und den Düsen 4c über ein Leitungssystem zugeführt. Denkbar ist, dass der Transporteur 3 einen Drehverteiler umfasst, um das Kohlendioxid dem Applikator 4a zuzuführen. Durch die schockartige Expansion des Kohlendioxids entsteht beim Austritt aus den Düsen 4c dann der Kohlendioxidschnee.

Zudem kann die Kühleinrichtung 4 eine Druckluftversorgung umfassen, mit der der Kohlendioxidschnee beim Austreten aus den Düsen 4c stabilisiert wird.

Wird alternativ der Applikator 4a mit einer (vom Transporteur 3 separaten) Verfahreinheit mit der Transportbewegung des Transporteurs mitgeführt, so kann bei der Zuführung des Kohlendioxids und/oder der Druckluft zum Applikator 4a anstelle des Drehverteilers auch mit flexiblen Schläuchen gearbeitet werden.

In der Figur 2 ist auch zu sehen, dass der Behälterboden 7a nicht eben sondern als gekrümmte geometrische Formgebung ausgebildet ist. Entsprechend ist der Austrittsbereich 4b mit den Düsen 4c gekrümmt und komplementär zur geometrischen Formgebung des Kunststoffbehälters 7, also hier dem Behälterboden 7a ausgebildet. Zu sehen ist auch, dass der Applikator 4 a von außen zu mehreren Bodenbereichen 7b des Kunststoffbehälters 7 hin ausgerichtet ist, die hier beispielsweise als Einbuchtungen ausgebildet sind, um sie gezielt zu kühlen. Bei umfangreichen Untersuchungen der Anmelderin hat sich herausgestellt, dass die Einbuchtungen 7b am Behälterboden 7a nach dem Umformen erhöhte Temperaturen aufweisen und daher besonders stark gekühlt werden müssen.

Dadurch, dass der Austrittsbereich 4b mit den Düsen 4c gekrümmt an die geometrische Formgebung des Kunststoffbehälters 7 angepasst ist, kann dieser besonders gleichmäßig und effizient gekühlt werden.

Darüber hinaus ist die Kühleinrichtung 4 derart ausgebildet, dass die Düsen 4c im Betrieb einen Abstand zu dem zu kühlenden Kunststoffbehälter 7 im Bereich von 10 - 40 mm, insbesondere von 15 - 30 mm aufweisen. Dadurch wird sichergestellt, dass der Kunststoffbehälter 7 einerseits nicht berührt und andererseits die von den Düsen 4c ausgehenden Strahlen mit Kohlendioxidschnee nicht zu stark aufgeweitet werden, so dass eine hohe Kühlwirkung sichergestellt ist.

In der Figur 3 ist eine seitliche Detailansicht eines alternativen Ausführungsbeispiels einer Kühleinrichtung 4 zum Kühlen der Kunststoffbehälter 7 mit Kohlendioxidschnee dargestellt. Das Ausführungsbeispiel in der Figur 3 unterscheidet sich von dem in der Figur 2 im Wesentlichen dadurch, dass der Applikator 4a stationär angeordnet ist, wobei der Transporteur 3 dazu ausgebildet ist, die Kunststoffbehälter 7 beim Kühlen gegenüber dem Applikator 4a zu verfahren. Anders ausgedrückt werden die Kunststoffbehälter 7 mit dem Transporteur 3 fortwährend in der Richtung R transportiert, während sie mittels des stationären Applikators 4a mit Kohlendioxidschnee besprüht werden. Dadurch kann die Kühleinrichtung 4 einfacher aufgebaut werden, da Kohlendioxid vom Generator 4d zum Applikator 4 a über starre Leitungen zugeführt werden kann.

Des Weiteren kann der Transporteur 3 in der Figur 3 als Teilungsverzugsstern ausgebildet sein, wodurch die Teilung der Kunststoffbehälter 7 beim Transport verringert wird und damit auch die Relativgeschwindigkeit zwischen der Transportbewegung der Kunststoffbehälter 7 und dem stationären Applikator 4a. Alternativ kann es sich bei dem Transporteur 3 auch um einen Doppelbelegungsstern handeln, bei dem jeder Kunststoffbehälter 7 insgesamt zweimal an dem Applikator 4a vorbeitransportiert wird. Dadurch vergrößert sich die Verweilzeit beim Kühlen, wodurch eine größere Kühlwirkung erzielt werden kann.

Alle weiteren Merkmale des Ausführungsbeispiels in der Figur 3 entsprechen denen aus der Figur 2.

Denkbar ist auch, dass bei den Ausführungsbeispielen in den Figuren 2 und 3 weitere Applikatoren vorhanden sind, die beispielsweise die Seitenwände des Kunststoffbehälters 7 zusätzlich zum dargestellten Applikator 4a kühlen.

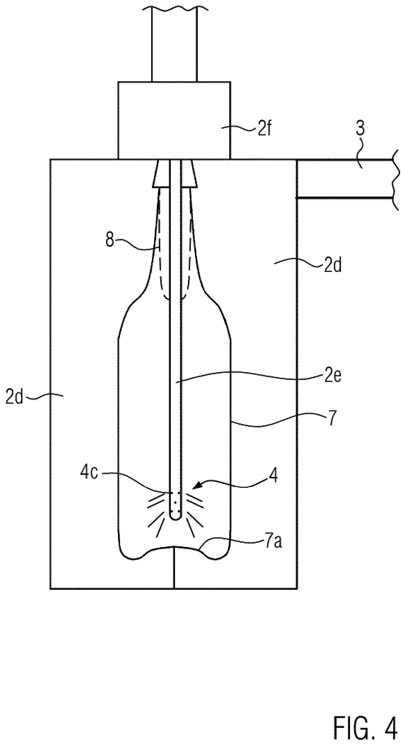

In der Figur 4 ist eine seitliche Detailansicht eines weiteren, alternativen Ausführungsbeispiels einer Kühleinrichtung 4 zum Kühlen der Kunststoffbehälter 7 mit Kohlendioxidschnee dargestellt. Es unterscheidet sich im Wesentlichen von den Ausführungsbeispielen in den Figuren 2 und 3 dadurch, dass der Applikator 4a der Kühleinrichtung 4 nicht mehr als separate Einheit nach der Blasformmaschine 2 sondern in die Reckstange der Blasformmaschine 2 integriert ausgebildet ist.

Zu sehen ist lediglich teilweise der Transporteur 3, bei dem es sich in diesem Ausführungsbeispiel um ein Karussell der Streckblasvorrichtung 2c der Blasformmaschine 2 handelt (vergleiche Figur 1). Daran angegliedert sind die Blasform 2d, die Blasdüse 2f sowie die Reckstange 2e. Beim Streckblasen wird ein mit dem Tunnelofen 2b erwärmter Vorformling 8 in den oberen Bereich der Blasformen 2d eingebracht (der Vorformling 8 ist hier gestrichelt angedeutet). Anschließend wird er mit der Reckstange 2e gestreckt und über die Blasdüse 2f aufgeblasen, bis er sich an die Innenwände der Blasformen 2d anlegt.

Anschließend wird der Kohlendioxidschnee aus den Düsen 4c an der Reckstange 2e in den noch warmen Kunststoffbehälter 7 abgegeben. Dadurch wird der Behälterboden 7a besonders stark von innen her gekühlt und stabilisiert bis die Blasformen 2d öffnen und den geblasenen Kunststoffbehälter 7 an den nächsten Transportstern weitergeben.

Denkbar ist, dass die Wandbereiche des Behälters 7 ebenfalls über weitere Düsen in der Reckstange 2e mit Kohlendioxidschnee gekühlt worden. Alternativ ist denkbar, dass die Blasform 2d mittels einer weiteren Kühleinrichtung wassergekühlt wird und darüber eine Kontaktkühlung der Behälterwände erfolgt.

Denkbar ist auch, dass die Kühleinrichtungen 4 der Figuren 4 und 2 bzw. der Figuren 4 und 3 miteinander kombiniert werden, also das ein Applikator 4a in die Reckstange 2e integriert ist und ein weiterer Applikator 4a an einem der Blasformmaschine 2 nachgeordneten Transporteur 3 angeordnet ist.

Insgesamt arbeiten die Kühleinrichtungen 4 der vorangegangenen Figuren 1-4 wie folgt:
Die Vorformlinge 8 werden mittels der Blasformmaschine 2 erwärmt und in Blasformen 2d zu den Kunststoffbehältern 7 umgeformt. Nach dem Umformen werden die Kunststoffbehälter 7 mit dem Transporteur 3 transportiert und dabei mit der daran angeordneten Kühleinrichtung 4 abgekühlt.
Die Kühleinrichtung 4 gibt dabei mit wenigstens einem Applikator 4a Kohlendioxidschnee auf die Kunststoffbehälter 7 ab, wodurch die Kühlwirkung besonders hoch und effizient ist.

Denkbar ist, dass der Applikator 4a beim Kühlen mit dem Transport der Kunststoffbehälter 7 mitgeführt wird (siehe Figur 2). Alternativ können die Kunststoffbehälter 7 beim Kühlen mittels des Transporteurs 3 gegenüber dem wenigstens einen stationär angeordneten Applikator 4a verfahren werden (siehe Figur 3).

Dadurch, dass die Kühleinrichtung 4 zum Kühlen der Kunststoffbehälter 7 wenigstens einen Applikator 4a für Kohlendioxidschnee umfasst, werden die Kunststoffbehälter mittels des Kohlendioxidschnees gekühlt. Bei umfangreichen Untersuchungen der Anmelderin hat sich herausgestellt, dass mit dem Kohlendioxidschnee an den Kunststoffbehältern 7 Oberflächentemperaturen von ca. -50 °C erzielt werden können. Dadurch nehmen die Wandungen der Kunststoffbehälter 7 besonders schnell eine Temperatur an, die unter der Glasübergangstemperatur liegt und können sich dann anschließend nicht mehr verformen. Überraschenderweise hat sich dabei anders als erwartet herausgestellt, dass die Kunststoffstruktur durch die schockartige Kühlung im Vergleich zu bekannten Kühlverfahren beständiger ist. Darüber hinaus gehen die Schneekristalle des Kohlendioxidschnees direkt vom festen in den gasförmigen Zustand über, so dass keine Tropfenbildung an den Kunststoffbehältern 7 erfolgt, die die Etikettierung beeinflussen könnte. Des Weiteren wird Kohlendioxid bereits in einer Vielzahl von Getränken zur Karbonisierung verwendet, weshalb eine Kontamination weniger wahrscheinlich ist.

Es versteht sich, dass in den zuvor beschriebenen Ausführungsbeispielen genannte Merkmale nicht auf diese Merkmalskombination beschränkt sind, sondern auch einzeln oder in beliebigen anderen Kombinationen möglich sind.

## Patentansprüche

1. Behälterbehandlungsanlage (1) zur Herstellung von Kunststoffbehältern (7), mit
einer Blasformmaschine (2), die dazu ausgebildet ist, Vorformlinge (8) zu erwärmen und in Blasformen (2d) zu den Kunststoffbehältern (7) umzuformen,
einem Transporteur (3), um die Kunststoffbehälter (7) wenigstens nach dem Umformen zu transportieren, und
mit einer an dem Transporteur (3) angeordneten Kühleinrichtung (4), um Kunststoffbehälter (7) nach dem Umformen abzukühlen,
**dadurch gekennzeichnet, dass**
die Kühleinrichtung (4) zum Kühlen der Kunststoffbehälter (7) wenigstens einen Applikator (4a) für Kohlendioxidschnee umfasst.

2. Behälterbehandlungsanlage (1) nach Anspruch 1, wobei der wenigstens eine Applikator (4a) jeweils einen Austrittsbereich (4b) mit mehreren Düsen (4c) zur Verteilung des Kohlendioxidschnees umfasst.

3. Behälterbehandlungsanlage (1) nach Anspruch 1, wobei die Kühleinrichtung (4) derart ausgebildet ist, dass die Düsen (4c) im Betrieb einen Abstand zu einem zu kühlenden Kunststoffbehälter (7) im Bereich von 10 - 40 mm, insbesondere von 15 - 30 mm aufweisen.

4. Behälterbehandlungsanlage (1) nach Anspruch 2 oder 3, wobei der Austrittsbereich (4b) mit den Düsen (4c) wenigstens abschnittsweise gekrümmt ist, um den Kohlendioxidschnee angepasst an eine geometrische Formgebung der Kunststoffbehälter (7) abzugeben.

5. Behälterbehandlungsanlage (1) nach Anspruch 4, wobei der Austrittsbereich (4b) mit den Düsen (4c) komplementär zur geometrischen Formgebung der Kunststoffbehälter (7) verläuft.

6. Behälterbehandlungsanlage (1) nach Anspruch 4 oder 5, wobei die geometrische Formgebung einen Behälterboden (7a) umfasst.

7. Behälterbehandlungsanlage (1) nach einem der vorangegangenen Ansprüche, wobei der wenigstens eine Applikator (4a) von außen zu einem oder mehreren Bodenbereichen (7b) des Kunststoffbehälters (7) hin ausgerichtet ist, um den einen oder die mehreren Bodenbereiche (7b) gezielt zu kühlen.

8. Behälterbehandlungsanlage (1) nach Anspruch 7, wobei die Bodenbereiche (7b) als Einbuchtungen am Behälterboden (7a) ausgebildet sind.

9. Behälterbehandlungsanlage (1) nach einem der vorangegangenen Ansprüche, wobei der wenigstens eine Applikator (4a) zumindest teilweise in eine Reckstange (2e) der Blasformmaschine (2) integriert ausgebildet ist.

10. Behälterbehandlungsanlage (1) nach einem der vorangegangenen Ansprüche, wobei der wenigstens eine Applikator (4a) mit einer Transportbewegung des Transporteurs (3) mitlaufend ausgebildet ist, um ihn wenigstens teilweise mit den Kunststoffbehältern (7) beim Transport mitzuführen.

11. Behälterbehandlungsanlage (1) nach einem der Ansprüche 1 - 9, wobei der wenigstens eine Applikator (4a) stationär angeordnet ist, und wobei der Transporteur (3) dazu ausgebildet ist, die Kunststoffbehälter (7) beim Kühlen gegenüber dem wenigstens einen Applikator (4a) zu verfahren oder anzuhalten.

12. Behälterbehandlungsanlage (1) nach einem der vorangegangenen Ansprüche, wobei der Transporteur (3) einen Teilungsverzugsstern oder einen Doppelbelegungsstern umfasst.

13. Behälterbehandlungsverfahren zur Herstellung von Kunststoffbehältern (7),
wobei Vorformlinge (8) mittels einer Blasformmaschine (2) erwärmt und in Blasformen (2d) zu den Kunststoffbehältern (7) umgeformt werden,
wobei die Kunststoffbehälter (7) wenigstens nach dem Umformen mit einem Transporteur (3) transportiert werden, und
wobei die Kunststoffbehälter (7) nach dem Umformen am Transporteur (3) mit einer daran angeordneten Kühleinrichtung (4) abgekühlt werden,
**dadurch gekennzeichnet, dass**
die Kühleinrichtung (4) mit wenigstens einem Applikator (4a) Kohlendioxidschnee auf die Kunststoffbehälter (7) abgibt, um sie abzukühlen.

14. Behälterbehandlungsverfahren (1) nach Anspruch 13, wobei der wenigstens eine Applikator (4a) beim Kühlen mit dem Transport der Kunststoffbehälter (7) mitgeführt wird.

15. Behälterbehandlungsverfahren (1) nach Anspruch 13, wobei die Kunststoffbehälter (7) beim Kühlen gegenüber dem wenigstens einen Applikator (4a) mittels des Transporteurs (3) verfahren oder angehalten werden.

## Claims

1. Container treatment system (1) for producing plastics containers (7), comprising a blow moulding machine (2) which is designed to heat preforms (8) and to shape the preforms in blow moulds (2d) to form the plastics containers (7), comprising a conveyor (3) for transporting the plastics containers (7) at least after shaping, and comprising a cooling device (4) arranged on the conveyor (3) for cooling the plastics containers (7) after shaping, **characterised in that** the cooling device (4) for cooling the plastics containers (7) comprises at least one applicator (4a) for carbon dioxide snow.

2. Container treatment system (1) according to claim 1, wherein the at least one applicator (4a) comprises in each case an outlet region (4b) having a plurality of nozzles (4c) for distributing the carbon dioxide snow.

3. Container treatment system (1) according to claim 1, wherein the cooling device (4) is designed such that, during operation, the nozzles (4c) are at a distance from a plastics container (7) to be cooled in the range of 10-40 mm, in particular 15-30 mm.

4. Container treatment system (1) according to either claim 2 or claim 3, wherein the outlet region (4b) having the nozzles (4c) is curved at least in portions in order to discharge the carbon dioxide snow so as to be adapted to a geometric shape of the plastics containers (7).

5. Container treatment system (1) according to claim 4, wherein the outlet region (4b) having the nozzles (4c) extends so as to be complementary to the geometric shape of the plastics containers (7).

6. Container treatment system (1) according to either claim 4 or claim 5, wherein the geometric shape comprises a container base (7a).

7. Container treatment system (1) according to any of the preceding claims, wherein the at least one applicator (4a) is oriented from the outside towards one or more base regions (7b) of the plastics container (7) in order to cool the one or more base regions (7b) in a targeted manner.

8. Container treatment system (1) according to claim 7, wherein the base regions (7b) are designed as indentations on the container base (7a).

9. Container treatment system (1) according to any of the preceding claims, wherein the at least one applicator (4a) is at least partially integrated into a stretching rod (2e) of the blow moulding machine (2).

10. Container treatment system (1) according to any of the preceding claims, wherein the at least one applicator (4a) is designed to follow a transport movement of the conveyor (3) so as to be at least partially carried along with the plastics containers (7) during transport.

11. Container treatment system (1) according to any of claims 1-9, wherein the at least one applicator (4a) is stationary, and wherein the conveyor (3) is designed to move or stop the plastics containers (7) with respect to the at least one applicator (4a) during cooling.

12. Container treatment system (1) according to any of the preceding claims, wherein the conveyor (3) comprises a pitch reduction star wheel or a double assignment star wheel.

13. Container treatment method for producing plastics containers (7), preforms (8) being heated by means of a blow moulding machine (2) and shaped in blow moulds (2d) to form the plastic containers (7), the plastics containers (7) being transported by means of a conveyor (3) at least after shaping, and the plastics containers (7) being cooled after shaping on the conveyor (3) by means of a cooling device (4) arranged thereon, **characterised in that** the cooling device (4) discharges carbon dioxide snow onto the plastics containers (7) by means of at least one applicator (4a) in order to cool the containers down.

14. Container treatment method (1) according to claim 13, wherein the at least one applicator (4a) is carried along with the transport of the plastics containers (7) during cooling.

15. Container treatment method (1) according to claim 13, wherein the plastics containers (7) are moved or stopped with respect to the at least one applicator (4a) by means of the conveyor (3) during cooling.

## Revendications

1. Installation de traitement de contenants (1) pour la fabrication de contenants en matière plastique (7), comprenant
une machine de formage par soufflage (2) qui est conçue pour chauffer des préformes (8) et les transformer en contenants en matière plastique (7) dans des moules de formage par soufflage (2d),
un dispositif de transport (3) pour transporter les contenants en matière plastique (7) au moins après le formage, et
comprenant un dispositif de refroidissement (4) agencé sur le dispositif de transport (3) pour refroidir les contenants en matière plastique (7) après le formage, **caractérisée en ce que**
le dispositif de refroidissement (4) pour refroidir le contenant en matière plastique (7) comprend au moins un applicateur (4a) de neige carbonique.

2. Installation de traitement de contenants (1) selon la revendication 1, dans laquelle le au moins un applicateur (4a) présente respectivement une zone de sortie (4b) munie de plusieurs buses (4c) pour distribuer la neige carbonique.

3. Installation de traitement de contenants (1) selon la revendication 1, dans laquelle le dispositif de refroidissement (4) est conçu de telle sorte qu'en fonctionnement, les buses (4c) sont à une distance d'un contenant en matière plastique (7) à refroidir dans la plage de 10 à 40 mm, en particulier de 15 à 30 mm.

4. Installation de traitement de contenants (1) selon la revendication 2 ou 3, dans laquelle la zone de sortie (4b) munie des buses (4c) est au moins partiellement incurvée pour délivrer la neige carbonique d'une manière adaptée à une conception géométrique du contenant en matière plastique (7).

5. Installation de traitement de contenants (1) selon la revendication 4, dans laquelle la zone de sortie (4b) munie des buses (4c) s'étend de manière complémentaire avec la conception géométrique du contenant en matière plastique (7).

6. Installation de traitement de contenants (1) selon la revendication 4 ou 5, dans laquelle la conception géométrique comprend un fond de contenant (7a).

7. Installation de traitement de contenants (1) selon l'une des revendications précédentes, dans laquelle le au moins un applicateur (4a) est orienté de l'extérieur vers une ou plusieurs zones de fond (7b) du contenant en matière plastique (7) afin de cibler les une ou plusieurs zones de fond (7b) pour un refroidissement.

8. Installation de traitement de contenants (1) selon la revendication 7, dans laquelle les zones de fond (7b) sont conçues comme des cavités sur le fond de contenant (7a).

9. Installation de traitement de contenants (1) selon l'une des revendications précédentes, dans laquelle le au moins un applicateur (4a) est au moins partiellement intégré dans une tige d'étirage (2e) de la machine de formage par soufflage (2).

10. Installation de traitement de contenants (1) selon l'une des revendications précédentes, dans laquelle le au moins un applicateur (4a) est conçu pour suivre un déplacement de transport du dispositif de transport (3) afin de le transporter au moins partiellement en même temps que le transport des contenants en matière plastique (7).

11. Installation de traitement de contenants (1) selon l'une des revendications 1 à 9, dans laquelle le au moins un applicateur (4a) est agencé stationnaire, et dans laquelle le dispositif de transport (3) est conçu pour déplacer ou arrêter les contenants en matière plastique (7) pendant le refroidissement par rapport au au moins un applicateur (4a).

12. Installation de traitement de contenants (1) selon l'une des revendications précédentes, dans laquelle le dispositif de transport (3) comprend une étoile à retard de distribution ou une étoile à double emploi.

13. Procédé de traitement de contenants pour la fabrication de contenants en matière plastique (7),
dans lequel les préformes (8) sont chauffées au moyen d'une machine de formage par soufflage (2) et transformées en contenants en matière plastique (7) dans des moules de formage soufflage (2d),
dans lequel les contenants en matière plastique (7) sont transportés à l'aide d'un dispositif de transport (3) au moins après le formage, et
dans lequel après le formage, les contenants en matière plastique (7) sont refroidis sur le dispositif de transport (3) à l'aide d'un dispositif de refroidissement (4) agencé dessus,
**caractérisé en ce que**
le dispositif de refroidissement (4), à l'aide d'au moins un applicateur (4a), délivre de la neige carbonique sur les contenants en matière plastique (7) afin de les refroidir.

14. Procédé de traitement de contenants (1) selon la revendication 13, dans lequel le au moins un applicateur (4a) est transporté en même temps que le transport du contenant en matière plastique (7) pendant le refroidissement.

15. Procédé de traitement de contenants (1) selon la revendication 13, dans lequel les contenants en matière plastique (7) sont déplacés ou arrêtés pendant le refroidissement par rapport au au moins un applicateur (4a) au moyen du dispositif de transport (3).
